(19) Europäisches Patentamt
European Patent Office
Office européen des brevets

(11) **EP 2 237 627 B1**

(12) **EUROPEAN PATENT SPECIFICATION**

(45) Date of publication and mention
of the grant of the patent:
**18.01.2012 Bulletin 2012/03**

(51) Int Cl.:
*H04W 52/28* (2009.01)    *H04W 52/26* (2009.01)
*H04W 52/50* (2009.01)    *H04L 12/26* (2006.01)

(21) Application number: **09157128.1**

(22) Date of filing: **01.04.2009**

(54) **Method for resolving network contention**

Verfahren zur Lösung der Netzwerkkonkurrenz

Procédé de résolution de la contention de réseau

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**06.10.2010 Bulletin 2010/40**

(73) Proprietors:
• **IMEC
3001 Leuven (BE)**
• **Katholieke Universiteit Leuven, K.U. Leuven R&D
3000 Leuven (BE)**

(72) Inventor: **Timmers, Michael
3000 Leuven (BE)**

(74) Representative: **Van Bladel, Marc et al
DenK iP bvba
Hundelgemsesteenweg 1114
9820 Merelbeke (BE)**

(56) References cited:
**US-A1- 2007 214 247**

• XUE YANG ET AL: "A Spatial Backoff Algorithm
Using the Joint Control of Carrier Sense
Threshold and Transmission Rate" SENSOR,
MESH AND AD HOC COMMUNICATIONS AND
NETWORKS, 2007. SECON &APOS ;07. 4TH
ANNUAL IEEE COMMUNICATIONS SOCIETY
CONFERENCE ON, IEEE, PI, 1 June 2007
(2007-06-01), pages 501-511, XP031128741 ISBN:
978-1-4244-1268-6
• XUE YANG ET AL: "Spatial backoff contention
resolution for wireless networks" WIRELESS
MESH NETWORKS, 2006. WIMESH 2006. 2ND
IEEE WORKSHOP ON, IEEE, PI, 1 January 2006
(2006-01-01), pages 13-22, XP031012159 ISBN:
978-1-4244-0732-3

**Description**

**Field of the Invention**

The present invention generally relates to data transmission in wireless networks. More in particular, it relates to a method and device for resolving network contention in wireless networks.

**Background of the Invention**

As the demand for wireless connectivity grows explosively, the deployment of broadband communication systems needs to become a lot more dense. Co-existence and interoperability become key concerns. Today, the most complex wireless scene can be found in the ISM (Industrial, Scientific and Medical) bands, where different heterogeneous networks and devices co-exist using only listen-before-talk etiquettes. In these bands the IEEE 802.11 standard is by far the most popular wireless standard for broadband access.

The success of dynamic spectrum access through simple listen-before-talk etiquettes has paved the way for opening up the spectrum. However, due to the complex nature of IEEE 802.11 networks, it is no easy task to optimize the throughput of such networks.

The IEEE 802.11 MAC protocol uses physical carrier sensing to schedule non-simultaneous transmissions. When all transmitters in a network are within each other's carrier sense range (i.e. the range within which they can detect the presence of a signal of another station) they share the channel fairly in the long run by using the IEEE 802.11 protocol. However, this assumption is clearly not always true. For multi-hop networks where nodes are distributed over an area that is larger than one carrier sense range, it has been shown that certain prominent inefficiencies arise when a terminal is not able to sense transmissions from all other terminals. This can lead to the hidden terminal problem, the exposed terminal problem, asymmetric starvation or neighbourhood starvation.

The hidden terminal problem arises when a terminal able to interfere with an ongoing transmission is not silenced by this transmission. Since the terminal is not silenced, it can start transmitting and thus cause a collision at the receiver. In some cases, this problem can be handled by using the optional Request-to-Send/Clear-to-Send (RTS/CTS) handshake, defined in the 802.11 MAC protocol. However, many researchers have since noted the inefficacy of this algorithm.

The exposed terminal problem can be seen as the opposite of the hidden terminal problem. Here, a terminal is silenced, even when it forms no threat to the ongoing transmission, i.e., when a transmission from this node would not cause a collision at the receiver side. The exposed terminal problem is wasteful since it results in a suboptimal use of the spectrum over space.

Asymmetric starvation describes the following asymmetric situation that might occur when using different powers and/or carrier sense thresholds. If the signal strength detected at a transmitter terminal is below the carrier sense threshold, said terminal can attempt to proceed with the transmission. Transmitter A is listening to transmitter B and silencing its transmissions when transmitter B sends. However, transmitter B has its carrier sense threshold set so that it doesn't silence when transmitter A transmits. This can lead to unfairness or in the worst case complete starvation (when B is a hidden node for link A).

Neighbourhood starvation is not so widely known. Here, a link is starved (i.e., deprived of channel access) when two or more of its neighbours, that can't hear each other, are transmitting simultaneously. Due to a loss of synchronization, those simultaneous transmissions can shift causing a partial overlap. As a result, the number of packets involved in such a collision train might be very large (because of continuous overlap) and the considered link can sense the channel busy for very long periods.

System parameters that can be tuned for maximizing the throughput of an IEEE 802.11 network comprise the transmission rate, the carrier sense threshold and the transmission power and others. Increasing the transmission rate increases the number of packets sent, but more packets will be lost at the receiver due to a lower interference tolerance. Lowering the carrier sense threshold protects a packet against interference, but decreases transmission opportunities by silencing the transmitter more often. Increasing the transmission power decreases packet losses at the receiver, but also reduces spatial reuse in the network.

A lot of work has been done on optimizing transmission rate, carrier sense threshold or transmission power individually. Patent application US2007/214247, for example, goes further, disclosing an algorithm for the joint tuning of two parameters, namely transmission rate and carrier sense threshold, in order to optimize the throughput in IEEE 802.11 networks. It introduces the concept of spatial backoff (SB). Spatial backoff assumes that the IEEE 802.11 MAC protocol has a set of discrete rates available. For each rate an associated carrier sense threshold $T_{CS}$ is defined as follows:

$$T_{CS}[i] = \frac{T_{Rx}}{\text{SINR}[i]} \qquad (1)$$

where $T_{Rx}$ is the receiver sensitivity (meaning that no packets with a receive power below $T_{Rx}$ can be received) and SINR[i] is the signal-to-interference-noise threshold for the discrete rate R[i]. Only when the SINR at the receiver exceeds SINR[i], packets can be received. It is assumed that when using a $T_{CS}$ equal to or lower than $T_{CS}[i]$ to transmit at rate i, it is unlikely that the transmitter overestimate the interference tolerance at the receiver. Hence, one is looking for a $T_{CS} \leq T_{CS}[i]$.

Transmitters start at the lowest rate R[0] and its associated $T_{CS}[0]$. When a certain number S of consecutive transmissions succeed, the rate is increased to R[i + 1], unless it is already transmitting at the highest rate. Likewise, when a certain number F of consecutive failures is seen, transmitters try to compensate by first lowering their $T_{CS}$. This is done as long as the $T_{CS}$ is higher than $T_{CS}[i]$. When the current $T_{CS}$ of the transmitter is equal to $T_{CS}[i]$ and transmission continue to fail, the rate is decreased to R[i- 1]. When decreasing to a lower rate, $T_{CS}$ is reset to its last known successful value for R[i-1].

To avoid overprobing higher rates, the number of consecutive successful transmissions S[i] needed to increase the rate, increases each time the transmitter falls back to rate i. A similar procedure is used for failures.

The approach presented in US2007/214247 suffers from some important limitations. Spatial backoff (SB) only considers collisions. However, collisions are not always a good indicator for throughput as a node might increase its throughput by using a lower rate and a higher carrier sense threshold as this can significantly increase transmission opportunities. The proposed converging method can be quite slow, when the transmitter has a lot of neighbours and occasionally a packet fails through a coordinated collision. SB uses a starvation detection mechanism to avoid a complete loss of transmission opportunities. This mechanism (with no transmission during a certain period of time) is quite slow and only detects the most severe cases of starvation, where a transmitter is deprived of all access to the medium. The selection of $T_{CS}[i]$ in SB is also quite defensive. Indeed, when the received power is high, the transmitter doesn't need to be as protective as when the received power is equal to $T_{Rx}$.

In the paper "A Spatial Backoff Algorithm using the joint control of carrier sense threshold and transmission rate" (X.Yang and N.Vaidya, IEEE Communications Society Conference on Sensor, Mesh and ad hoc communications and networks (SECON) 2007, pp.501-511) authored by the inventors of US2007/214247, it is mentioned that '*potentially all three parameters, power, CS threshold and rate, can be jointly controlled to achieve spatial backoff* (p.503). However, in their conclusions the authors admit themselves that '*work is needed to determine appropriate ways to realize such a joint control*' (p.511).

Consequently, there is a need to find a way to joint control all three parameters power, carrier sense threshold and rate.

## Aims of the invention

The present invention aims to provide a method and device for resolving network contention wherein at least three parameters are jointly controlled.

## Summary

The present invention relates to a method for resolving network contention in a wireless network having a plurality of communication devices. The method comprises the steps of :

-    determining a set of initial values of at least three parameters of a first device of said plurality, at least one of the at least three parameters being indicative of the transmit power of the first device,
-    determining, given the set of initial values, a gain measure obtainable by changing the set of initial values of the at least three parameters into a set of updated values, said gain measure taking into account that parameter indicative of the transmit power,
-    deciding according to the determined gain measure on using the set of updated values of the at least three parameters for the first device.

In a preferred embodiment the gain measure takes into account the parameter indicative of the transmit power by using a cost function wherein the transmit power is weighed. Preferably the weights are determined such that lower transmit power values are favoured over higher transmit power values. As there is a cost involved in using a higher power, an incentive is given to the network nodes to scale down the power.

In a preferred embodiment the at least three parameters determine a state of the first device, whereby said state is at least dependent on an indication on the receive power at a further device of the plurality with which the first device is communicating. The method then advantageously comprises a step of conveying information on the receive power to the first device.

Preferably the at least three parameters also comprise a transmission rate and a carrier sense threshold related to said first device.

The step of determining a gain measure is advantageously performed by means of a learning algorithm arranged for yielding an output partially determined by feedback from at least one earlier output. In other words, the output is dependent on the impact of at least one earlier output.

The gain measure is performed by means of a heuristic technique. In this case preferably a step is performed of determining operational communication conditions prior to applying the heuristic technique. The heuristic approach is then selected according to the determined operational communication conditions.

The determined operational conditions correspond to a scenario selected from the group {hidden terminal starvation, asymmetric starvation, neighbourhood starvation}.

### Brief Description of the Drawings

Fig. 1 illustrates the solution proposed in the present invention.

Fig. 2 illustrates the effect of the path loss in the selection of the carrier sense threshold.

Fig. 3 illustrates possible actions for each state defined by rate and carrier sense threshold.

Fig. 4 illustrates different types of starvation mechanisms.

Fig. 5 illustrates an example to show the benefits of each contribution.

Fig. 6 illustrates a centralized topology.

Fig. 7 plots Spatial Backoff and Spatial Learning results.

Fig. 8 illustrates the impact of the heuristics on convergence speed.

Fig. 9 illustrates the performance of 802.11 terminals enhanced with Spatial Learning.

### Detailed Description of the Invention

It is widely recognized that tuning different parameters of the protocol can maximize the throughput of IEEE 802.11 networks. The network nodes are assumed to be selfish and try to maximize their own throughput. This is a commonly accepted premise in the field of game theory and cognitive radios. To find an optimal configuration of power, rate and carrier sense threshold, a learning based approach is proposed in the present invention rather than totally relying on a heuristic. One proposed learning scheme is Q-learning, which is here used to exemplify the invention and described more in detail below. However, also other algorithms for reinforcement learning can be envisaged, e.g. regret matching.

Differentiation is made between the starvation types and allows the algorithm to change its response depending on the encountered situation. This is done by using heuristics to alter the exploration distribution of the Q-learning algorithm. In this way the convergence of the proposed algorithm is speeded up. The algorithm of the present invention exhibits the following desired properties for an 802.11 control algorithm. It is a single-channel solution and maintains interoperability with other standards. Furthermore it is backward compatible with all IEEE 802.11 protocols as long as a terminal has a tuneable power, rate and carrier sense threshold selection.

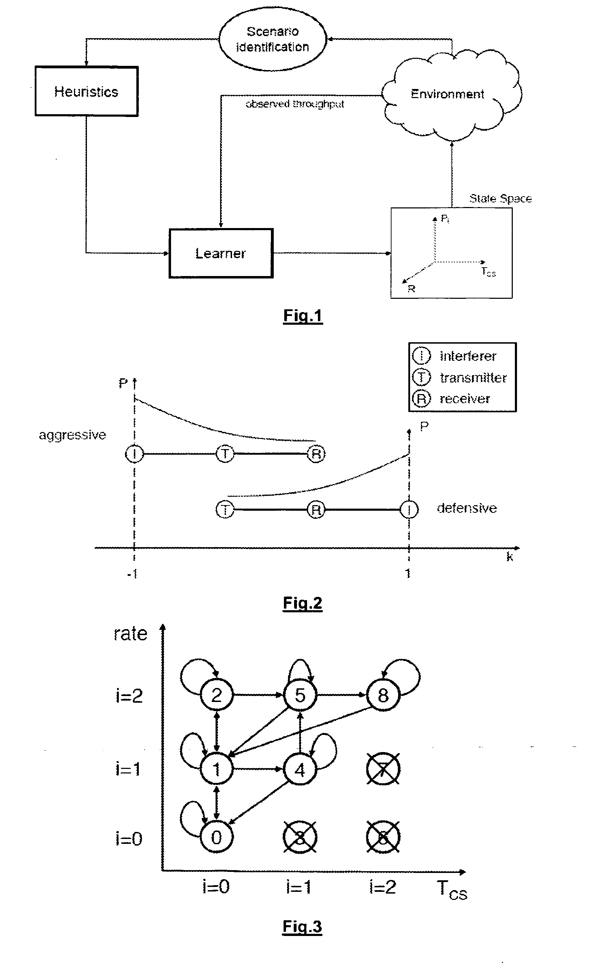

First the general framework of the control algorithm of the invention is introduced (see Fig. 1). The learner interprets how the environment reacts to the selected actions and adapts his actions based on this feedback. As shown in Fig.1, the learner may be assisted by heuristics to speed up convergence. The heuristic action suggestions are based on scenario identification, taken from local observations of the environment.

The set of possible state parameter configurations for the control algorithm is selected at design time by the operator. The state space is restricted to allow faster convergence of the algorithm. Increasing the number of possible configurations decreases convergence speed, but possibly allows more optimal results.

Due to the underlying modulation schemes, the rate is the least flexible parameter and hence does not need any design-time restriction. All rates that the platform supports are used to bound the more flexible parameters, namely carrier sense thresholds and power.

Regarding the transmission power the following rule-of-thumb is used : the number of transmission powers is selected equal to the number of available rates and they are distributed these uniformly over the interval $[\max(P_t)/\eta_R, \max(P_t)]$, where $\eta_R$ is the number of available rates and $\max(Pt)$ the maximum available transmission power.

The selection of $T_{CS}[i]$, which is the most flexible parameter, is performed as follows. Rather than relying on the same states for each transmitter, the transmitter is allowed to select its $T_{CS}[i]$ based on the path loss:

$$T_{CS}[i] = \left(\frac{P_r}{P_t}\right)^k \left(\frac{P_r}{SINR[i]} - \sigma_0^2\right) \tag{2}$$

where $P_t$ is the transmit power, $P_r$ is the received power and $\sigma_0^2$ a model for the noise power at the receiver. The operator can choose the parameter $k$ from the interval [-1, 1]. The aggressive point, $k = -1$, assumes that the interference power suffers from the same path loss as the link between transmitter and receiver. The defensive point, $k = 1$, assumes that the interference power suffers an extra path loss from receiver to transmitter (see Fig. 2). Throughout the remainder of this description, a neutral setting (k = 0) is used.

Of course, the transmitter needs to know the value of $P_r$. A commonly accepted way is to piggyback the received power in the acknowledgment. Even when it would be difficult to estimate the received power, the spatial learning algorithm of the invention is capable of compensating by selection of appropriate states within the space. This improved state space is denoted $P_r$-states.

To find the optimal configuration in the state space, a learning based approach is proposed rather than totally relying on a heuristic. A suitable learning scheme is Q-learning, which does not need a model of the environment and can be used online. The Q-learning algorithm works by estimating the values of state-action pairs. In the context of the invention, an action is the transition from the current state ($s_c$) to a new state ($S_n$). The value $Q(S_c, S_n)$ is defined as the expected discounted sum of future payoffs obtained by going to the new state and following an optimal policy thereafter. Once these values have been learned, the optimal action from any state is the one with the highest Q-value. The standard procedure for Q-learning is as follows. All Q-values are initialized to 0. During the exploration of the state space, the Q-values are updated as follows:

$$Q(s_c, s_n) \leftarrow (1 - \alpha)Q(s_c, s_n) + \alpha \left[ (1 - \gamma)r + \gamma \max_{s \in A(s_n)} Q(s_c, s_n) \right] \tag{3}$$

where $\alpha$ is a forget factor, $\gamma$ a learning parameter and $A$ denotes the set of candidate new states. To implement Q-learning the actions within the state space need to be defined first. The possible actions in each state can be seen in Fig. 3 for an example with three rates available. In each state the transmitter can decide (if possible) to remain in that state (i.e. to keep the current configuration), to increase the rate, decrease the carrier sense threshold $T_{CS}$ or decrease the rate. When decreasing the rate, the transmitter is forced to reset its $T_{CS}$ to $T_{CS}[0]$. The states where $T_{CS}$ is smaller than $T_{CS}[i]$ have been pruned as explained later on. The reward r is defined as the throughput increase for going to state $S_n$:

$$r = S(s_n) - S(s_c) \tag{4}$$

where S(s) is the throughput seen in state $s$.

It is important to note that the Q-learning algorithm updates the estimate for each action, but in fact does not specify what actions should be taken. It allows arbitrary experimentation while at the same time preserving the current best estimate of the states' values. For example, an instantiation of simulated annealing as follows can be used. The terminals explore using a soft-max policy, where each terminal selects an action with a probability given by the Boltzmann distribution (more details on this are provided in the paper "Exploring versus Exploiting: Enhanced Distributed Cognitive Coexistence between IEEE 802.11 and IEEE 802.15.4", M. Timmers et al., Proc. of the IEEE Conference on Sensors, Oct. 2008)

$$p_Q(s_c, s_n) = \frac{e^{\frac{Q(s_c, s_n)}{T}}}{\sum_{\forall s \in A(s_c)} e^{\frac{Q(s_c, s)}{T}}} \tag{5}$$

where T is the temperature that controls the amount of exploration. For higher values of T the actions are equiprobable.

By annealing the algorithm (cooling it down) the policy becomes more and more greedy. The following annealing scheme is used, whereby θ denotes the annealing factor:

$$T_{k+1} \leftarrow \theta T_k \tag{6}$$

To further improve network-wide throughput and fairness, transmitters are allowed to tune their power. Of course, from a throughput point of view, the optimal decision is always to send at the maximum power. So terminals need to be given (a small) incentive to scale down the power. Hence a cost is introduced for using higher powers:

$$r(s_n, s_c) = \overline{\rho}(I_n)S * (s_n) - \overline{\rho}(I_c)S * (s_c) \tag{7}$$

where I is the power index ($I = 0$ refers to the lowest power, $I = n_p - 1$ refers to the highest power). The reward factors are defined as follows:

$$\overline{\rho}(I) = \overline{\rho}^I : I \in [0, n_p - 1] \tag{8}$$

where ρ is an element of (0, 1] and $n_p$ is the number of available transmission powers. With a high $\rho_i$ nodes scale down their power, until they see a drop in throughput. With a lower $\rho_i$ they even accept a small reduction in throughput. By allowing good links to scale down their power without dropping their throughput, interference levels drop for the surrounding links. These links might now be able to send at a higher rate. This again improves network-wide throughput and fairness.

Reward and actions having been defined, we now detail the implementation in the IEEE 802.11 MAC protocol. The basic concept is to stay in one state for a certain time $t_u$. After this.time has passed, the Q-values are updated and a new state is selected according to expression (5). As one wants to track the throughput as reward, a logical choice would be to count the number of successfully transmitted packets during $t_u$. However, this number of packets is highly dependent of the instantiations of the backoff values during the observation time. This noise might cause the learner to misinterpret the reward. To remove the correlation between backoff selection and observed throughput, a theoretical saturation throughput S* of IEEE 802.11 is used rather than the observed throughput. Here, the throughput is calculated based on five parameters: the collision probability $p_c$, the busy probability $p_b$, the length of a collision slot $t_c$, the length of a busy slot $t_b$ and the length of a successful slot $t_s$. By using the transmissions as a probing for $p_c$, $t_s$ and $t_c$ and observing $p_b$ and $t_b$ when the transmitter is not sending, a theoretical throughput can be calculated, which is no longer dependent on the actual instantiations of the backoff value. However, not all unwanted correlations are removed. Indeed, the throughput is also dependent on the backoff values and actions of other transmitters in the neighbourhood. As the transmitter has no way of knowing these, one tries to average out these variations by observing the following relations:

$$p_c = f(R, P_t, T_{CS}), \quad t_c = f(R, P_t, T_{CS}), \quad t_s = f(R, P_t, T_{CS})$$
$$p_i = f(P_t, T_{CS}), \quad t_b = f(P_t, T_{CS})$$

One can see that $p_i$ and $t_b$ are only a function of $T_{CS}$ and not rate dependent. Hence, the throughput estimation of a certain state can be updated based on observations in states that have the same $T_{CS}$.

Because the addition of power brings extra states, convergence is slower. Generally, Q-learning is a slow and blind method, but reaches an optimal setting. On the other side, heuristics are fast, but might lead to a suboptimal setting. By allowing heuristics to alter the distribution during the exploration phase of the Q-learning, one can combine the best of both worlds. In order to use heuristics, it must first be known which are the present operational conditions wherein the communication takes place, i.e. which is the present scenario. Scenarios that one tries to distinguish, may be hidden terminal starvation, asymmetric starvation and neighbourhood starvation.

- Hidden terminal starvation is the easiest to detect, as only an inspection of $p_c$ is needed. Indeed, it is signalled through a high collision probability.

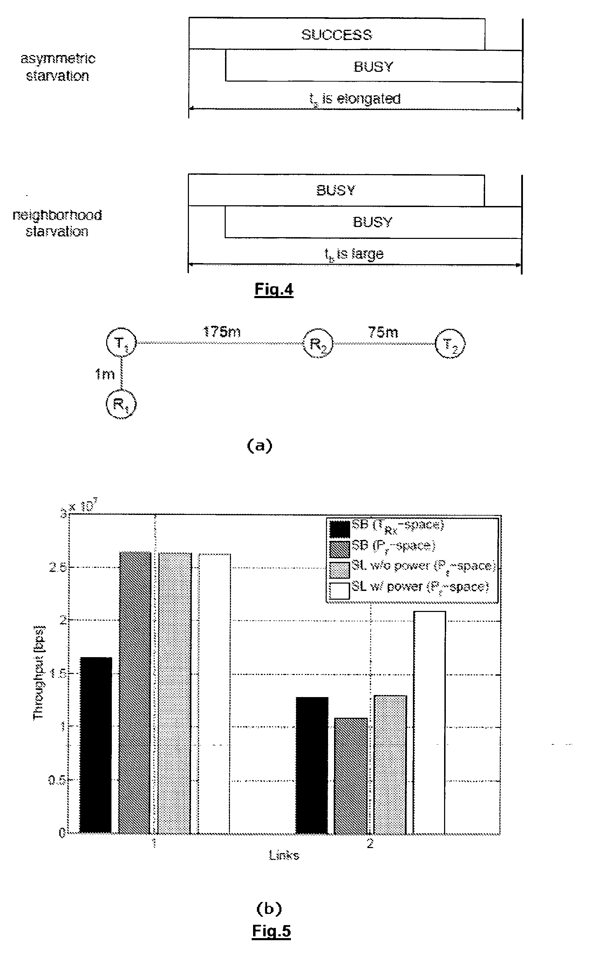

- Asymmetric starvation is detected as follows. A timer is kept from the beginning of transmission until the backoff timer can be decremented. If a successful transmission lasts longer than expected (the expected duration of a collision or a successful transmission can be easily calculated), a neighbouring node started transmitting during our transmission. This means that this node was not listening to our transmission, but we are listening to his transmission. Hence, this is a clear case of asymmetric starvation (see Fig. 4).
- Neighbourhood starvation is detected by long busy times (see Fig. 4). Using this detection mechanism, one cannot distinguish between slow neighbours and neighbourhood starvation. However, as the recommendation for this situation is the same (you want to increase $T_{CS}$), this does not really matter.

For each (combination of) scenario(s), heuristic probabilities need to be defined. These are based on the recommendations, found in Table I. For instance, when a node is dealing with asymmetric starvation, it makes sense to either increase the power or decrease the carrier sense threshold in order to alleviate this situation.

**Table 1**

| Starvation Mechanism | Recommend | Neutral | Avoid |
|---|---|---|---|
| No Starvation | increase rate decrease power | stay | decrease $T_{CS}$ |
| Hidden Node Starvation | increase power decrease $T_{CS}$ | | increase rate stay |
| Asymmetric Starvation | increase power decrease $T_{CS}$ | | stay |
| Neighborhood Starvation | increase $T_{CS}$ | | stay |

The heuristic probabilities need to be added in the Q-learning mechanism. The idea is that the heuristic probabilities are followed during the exploration phase and that when the temperature cools down, the Q-learning takes over from the heuristic. This can be achieved by redefining (5) as follows:

$$p_{HQ}(s_c, s_n) = \frac{p_H(s_c, s_n)e^{\frac{Q(s_c, s_n)}{T}}}{\sum_{\forall s \in A(s_c)} \left( p_H(s_c, s)e^{\frac{Q(s_c, s)}{T}} \right)} \tag{9}$$

Care has to be taken in choosing the heuristic probabilities. An equiprobable distribution for $p_H$ turns (9) back into regular Q-learning. The heuristic limits exploration for the Q-learning by guiding the algorithm to what it feels are the correct states to turn to. This speeds up convergence, as explained above, but increases the risk of settling down in a suboptimal state as some states (among which, the optimal) might not have been visited during exploration.

The performance of the proposed algorithm has been evaluated through an extensive simulation study. Some obtained results are presented here. All simulations are done using a shadowing model with a path loss exponent of 4 and a shadowing of 4dB. As can be seen in Table II, it is assumed terminals are capable of transmitting at four discrete rates. Also four power levels are used. For parameters not present in Table II the default values are used.

**Table 2**

| (Rate [Mbps],SINR [dB]) | Power [mW] |
|---|---|
| (9,7.78) | 250 |
| (18,10.79) | 125 |
| (36,18.80) | 66.25 |
| (54,24.56) | 33.125 |

As a first result, an illustrative example is presented that demonstrates the benefits of the different contributions. The scenario is presented in Fig. 5(a). In Fig. 5(b), one can see that the $T_{CS}$ based on $T_{Rx}$ is too defensive. Link 1 can increase its throughput with a smarter state space selection. This, however, has an impact on the throughput for link 2.

When using SL without power flexibility, one can quickly converge on the correct state, which is the second-lowest rate. When link 1 is allowed to decrease its power, interference for link 2 reduces and it is able to sustain a higher rate.

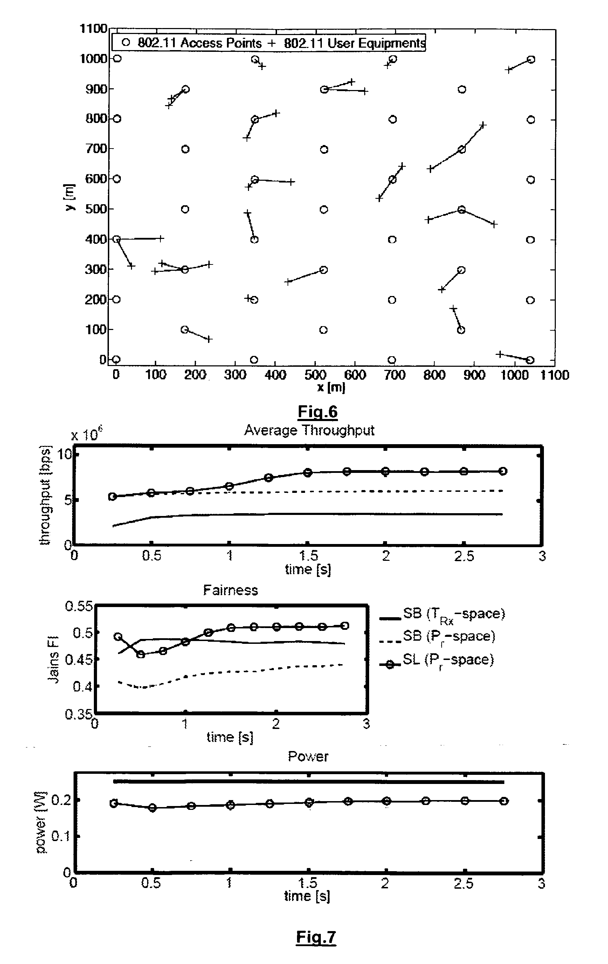

As illustrated in Fig.6, it is assumed that 802.11 access points form a hexagonal grid. The User Equipments (UEs) are distributed according to a spatial Poisson point process with a density $\delta$ = 25 nodes/km$^2$. UEs are sending uplink traffic using the DCF mode. The results for a complete ad-hoc network are similar, but this topology is believed to be a better representation of 802.11 networks today.

In Fig.7 a comparison is presented between SB and SL. Results are averaged over 100 seeds, using the topology of Fig.6. One can see that the new $T_{CS}$ definition according to the invention, based on $P_r$, significantly increases throughput. The definition based on $T_{Rx}$ does not provide a lot of differentiation among the different states. This can be seen by the fact that SL cannot improve over SB using these states and by the fact that it reduces the transmission power significantly for these states. However the introduction of the new states also causes more unfairness in the network. By allowing the nodes to scale down power, SL compensates for this and reaches the same levels of fairness as the $T_{Rx}$-states. Most importantly, SL is shown to outperform SB by 33% in throughput using the $P_r$-based states.

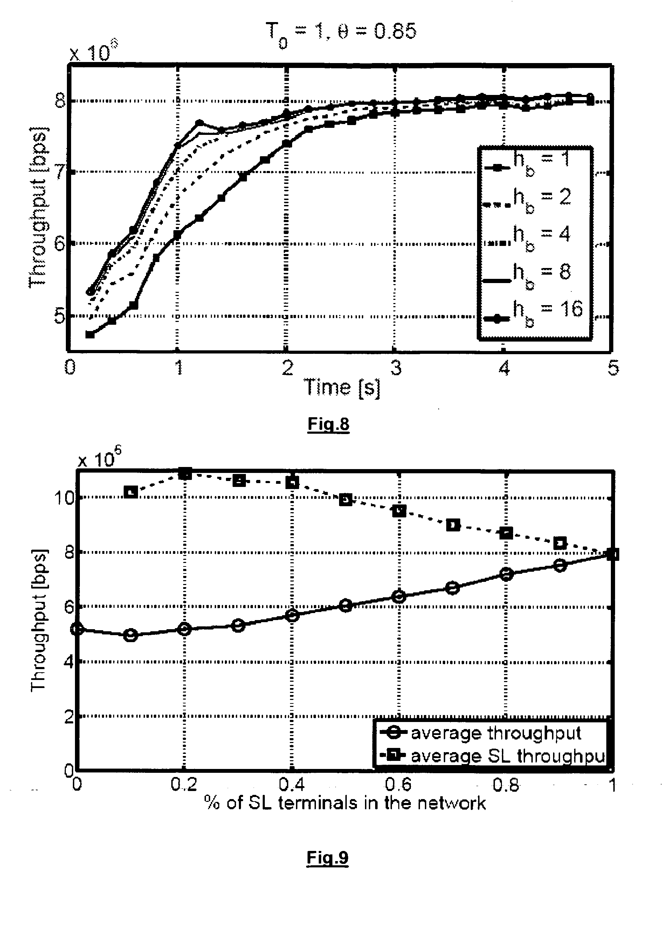

The impact of heuristics on the convergence of SL is illustrated in Fig.8. Again, the topology of Fig.6 is used and averaged over 100 seeds. It can be clearly seen that the use of domain knowledge in the form of heuristics results in a significant increase in convergence speed. To demonstrate the interoperability of SL, the performance of SL is shown in a legacy 802.11 network in Fig.9. As most of the current commercial 802.11 cards support some kind of Auto-Rate Fallback (ARF), this was implemented for the legacy 802.11 terminals. One can see that SL performs better among legacy 802.11 terminals as these cannot optimize their own transmissions fully, generating opportunities for the SL terminals. However, adding more SL terminals doesn't reduce the average throughput of the SL terminals that much. This makes for a compelling business case, where the first adopters are rewarded the most.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for resolving network contention in a wireless network having a plurality of communication devices, the method comprising the steps of

- determining a set of initial values of at least three parameters of a first device of said plurality, said at least three parameters being indicative of the transmit power of said first device, transmission rate and carrier sense threshold related to said first device,
- determining, given said set of initial values, a measure of the gain in throughput obtainable by changing said set of initial values of said at least three parameters into a set of updated values, said measure of the gain in throughput taking into account said parameter indicative of the transmit power,
- deciding according to the determined measure of the gain in throughput on using said set of updated values of said at least three parameters for said first device.

2. Method as in claim 1, whereby said measure of the gain in throughput takes into account said parameter indicative of the transmit power by using a cost function wherein the transmit power is weighed.

**3.** Method as in claim 2, wherein weights are determined such that lower transmit power values are favoured over higher transmit power values.

**4.** Method as in any of claims 1 to 3, wherein said at least three parameters determine a state of said first device, said state being at least dependent on an indication on the receive power at a further device of said plurality with which said first device is communicating.

**5.** Method as in claim 4, comprising a step of conveying information on said receive power to said first device.

**6.** Method as in any of the previous claims, wherein the step of determining a measure of the gain in throughput is performed by means of a learning algorithm arranged for yielding an output partially determined by feedback from at least one earlier output.

**7.** Method as in any of the previous claims, wherein said measure of the gain in throughput is performed by means of a heuristic technique.

**8.** Method as in claim 7, wherein prior to applying said heuristic technique a step is performed of determining operational communication conditions, whereby said heuristic technique is selected according to the determined operational communication conditions.

**9.** Method as in claim 8, wherein the determined operational conditions correspond to a scenario selected from the group {hidden terminal starvation, asymmetric starvation, neighbourhood starvation}.

**Patentansprüche**

**1.** Verfahren zum Lösen eines Netzwerkkonfliktes in einem drahtlosen Netzwerk mit mehreren Kommunikationsgeräten, wobei das Verfahren folgende Schritte umfasst :

- Festlegen einer Reihe von Ausgangswerten von mindestens drei Parametern eines ersten Gerätes von diesen mehreren, wobei die mindestens drei Parameter bezeichnend sind für die Übertragungskraft des ersten Gerätes, die Übertragungsrate und Trägerabfragegrenze in Bezug auf das erste Gerät,
- Ermitteln, ausgehend von dieser Reihe von Ausgangswerten, einer Messung der Datendurchsatzsteigerung, die durch Ersetzen der Reihe von Ausgangswerten von mindestens drei Parametern durch ein Reihe von aktualisierten Werten erhalten werden kann, wobei die Messung der Datendurchsatzsteigerung den Parameter, der für die Übertragungskraft bezeichnend ist, berücksichtigt,
- Entscheiden, anhand der ermittelten Messung der Datendurchsatzsteigerung, über die Verwendung der Reihe von aktualisierten Werten von den mindestens drei Parametern für das erste Gerät.

**2.** Verfahren nach Anspruch 1, wobei die Messung der Datendurchsatzsteigerung den Parameter, der für die Übertragungskraft bezeichnend ist, durch Verwenden einer Kostenfunktion berücksichtigt, wobei die Übertragungskraft gewichtet wird.

**3.** Verfahren nach Anspruch 2, wobei Gewichtungen festgelegt werden, so dass niedrigere Übertragungskraftwerte gegenüber höheren Übertragungskraftwerten bevorzugt werden.

**4.** Verfahren nach einem der Ansprüche 1 bis 3, wobei die mindestens drei Parameter einen Zustand des ersten Gerätes festlegen, wobei dieser Zustand mindestens von einer Angabe über die Empfangskraft eines anderen Gerätes von diesen mehreren, mit denen das erste Gerät kommuniziert, abhängig ist.

**5.** Verfahren nach Anspruch 4, umfassend einen Schritt des Übermittelns von Information über die Empfangskraft an das erste Gerät.

**6.** Verfahren nach einem der vorhergehenden Ansprüche, wobei der Schritt des Ermittelns einer Messung der Datendurchsatzsteigerung mittels eines Lernalgorithmus ausgeführt wird, der eine Ausgabe liefern soll, die teilweise durch Rückmeldung von mindestens einer früheren Ausgabe ermittelt wird.

**7.** Verfahren nach einem der vorhergehenden Ansprüche, wobei die Messung der Datendurchsatzsteigerung mittels einer heuristischen Technik erfolgt.

**8.** Verfahren nach Anspruch 7, wobei vor dem Anwenden der heuristischen Technik ein Schritt des Festlegens operationeller Kommunikationsbedingungen erfolgt, wobei die heuristische Technik anhand der festgelegten operationellen Kommunikationsbedingungen ausgewählt wird.

**9.** Verfahren nach Anspruch 8, wobei die festgelegten operationellen Bedingungen einem Szenario entsprechen, das aus der Gruppe {Hidden-Terminal-"Verhungerung", asymmetrische "Verhungerung", Nachbarschafts-"Verhungerung"} ausgewählt wird.

**Revendications**

**1.** Procédé pour résoudre une contention de réseau dans un réseau sans fil ayant une pluralité de dispositifs de communication, le procédé comprenant les étapes consistant à

- déterminer un ensemble de valeurs initiales d'au moins trois paramètres d'un premier dispositif de ladite pluralité, lesdits au moins trois paramètres étant indicatifs de la puissance de transmission dudit premier dispositif, du débit de transmission et du seuil d'écoute de porteuse liés audit premier dispositif,
- déterminer, étant donné ledit ensemble de valeurs initiales, une mesure du gain de débit pouvant être obtenu en changeant ledit ensemble de valeurs initiales desdits au moins trois paramètres en un ensemble de valeurs mises à jour, ladite mesure du gain de débit tenant compte dudit paramètre indicatif de la puissance de transmission,
- décider selon la mesure du gain de débit déterminée d'utiliser ledit ensemble de valeurs mises à jour desdits au moins trois paramètres pour ledit premier dispositif.

**2.** Procédé selon la revendication 1, moyennant quoi ladite mesure du gain de débit tient compte dudit paramètre indicatif de la puissance de transmission en utilisant une fonction de coût où la puissance de transmission est pondérée.

**3.** Procédé selon la revendication 2, dans lequel des poids sont déterminés de sorte que des valeurs de puissance de transmission inférieures soient privilégiées par rapport à des valeurs de puissance de transmission supérieures.

**4.** Procédé selon l'une quelconque des revendications 1 à 3, dans lequel lesdits au moins trois paramètres déterminent un état dudit premier dispositif, ledit état étant au moins dépendant d'une indication sur la puissance de réception au niveau d'un autre dispositif de ladite pluralité avec lequel ledit premier dispositif communique.

**5.** Procédé selon la revendication 4, comprenant une étape consistant à acheminer des informations sur ladite puissance de réception audit premier dispositif.

**6.** Procédé selon l'une quelconque des revendications précédentes, dans lequel l'étape consistant à déterminer une mesure du gain de débit est effectuée au moyen d'un algorithme d'apprentissage agencé pour produire une sortie déterminée en partie par rétroaction depuis au moins une sortie précédente.

**7.** Procédé selon l'une quelconque des revendications précédentes, dans lequel ladite mesure du gain de débit est effectuée au moyen d'une technique heuristique.

**8.** Procédé selon la revendication 7, dans lequel avant l'application de ladite technique heuristique, une étape est effectuée consistant à déterminer des conditions de communication opérationnelles, moyennant quoi ladite technique heuristique est sélectionnée selon les conditions de communication opérationnelles déterminées.

**9.** Procédé selon la revendication 8, dans lequel les conditions opérationnelles déterminées correspondent à un scénario choisi dans le groupe {insuffisance de ressources de terminal caché, insuffisance de ressources asymétrique, insuffisance de ressources de voisinage}.

**Fig.1**

**Fig.2**

**Fig.3**

asymmetric
starvation

| SUCCESS |
| BUSY |

$t_s$ is elongated

neighborhood
starvation

| BUSY |
| BUSY |

$t_b$ is large

**Fig.4**

T₁ —— 175m —— R₂ —— 75m —— T₂

1m

R₁

**(a)**

**(b)**
**Fig.5**

**Fig.6**

**Fig.7**

$T_0 = 1, \theta = 0.85$

**Fig.8**

**Fig.9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007214247 A

**Non-patent literature cited in the description**

- **X.Yang ; N.Vaidya.** A Spatial Backoff Algorithm using the joint control of carrier sense threshold and transmission rate. *IEEE Communications Society Conference on Sensor, Mesh and ad hoc communications and networks (SECON),* 2007, 501-511

- **M. Timmers et al.** Exploring versus Exploiting: Enhanced Distributed Cognitive Coexistence between IEEE 802.11 and IEEE 802.15.4. *Proc. of the IEEE Conference on Sensors,* October 2008